# EUROPÄISCHE PATENTSCHRIFT

(11) **EP 1 733 657 B1**
(45) Veröffentlichungstag und Bekanntmachung des Hinweises auf die Patenterteilung: **30.03.2011**
(21) Anmeldenummer: 06009762.3
(22) Anmeldetag: 11.05.2006
(51) Int. Cl.: A47G 19/16, A47J 31/06

(54) **Teesieb**
Tea infuser
Infuseur à thé

(30) Priorität: 11.05.2005 DE 102005021834; 24.08.2005 DE 102005040095
(43) Veröffentlichungstag der Anmeldung: 20.12.2006
(73) Patentinhaber: Völkl, Thomas, 83052 Bruckmühl (DE)
(72) Erfinder: Völkl, Thomas, 83052 Bruckmühl (DE)
(74) Vertreter: Alber, Norbert

(56) Entgegenhaltungen:
- DE-A1- 3 806 695
- DE-C- 818 683
- GB-A- 2 052 250
- US-B1- 6 314 866

## Beschreibung

### I. Anwendungsgebiet

Die Erfindung betrifft Teesiebe (siche DE-A-3806695).

### II. Technischer Hintergrund

Teesiebe werden heute in unterschiedlichen Arten hergestellt und verwendet, sind prinzipiell nach einmaliger oder mehrfacher Verwendbarkeit getrennt zu betrachten:

Die Siebe für einmalige Verwendbarkeit bestehen aus einer Gaze, die meist aus Zellstoff oder Papier besteht und selbst nicht formstabil ist. Formstabilität erhält sie dadurch, dass sie entweder mit einem formstabilen Rand aus Pappe, stärkerem Papier oder einem anderen Material dauerhaft oder vorübergehend befestigt ist. Bei dauerhafter Befestigung wird dieser formstabile Teil zusammen mit dem eigentlichem Filterteil anschließend weggeworfen Bei lösbarer Befestigung wird ein solcher Filter auf einem Spannring aus z. B. Kunststoff aufgespannt.

Daneben sind insgesamt wiederverwertbare Teefilter bekannt, die ganz aus Glas, Porzellan, Edelstahl oder Kunststoff bestehen, wobei meist in einem formhaltigen Körper aus Glas oder Kunststoff eine Gaze oder ein Gewebe in Form eines engmaschigen Netzes angeordnet ist, welches aus Kunststoff, Metall oder Textilmaterial besteht und nicht oder nur begrenzt selbst formhaltig ist. Wegen der festen Verbindung mit dem formhaltigen Grundkörper werden diese Teesiebe insgesamt wiederverwendet.

Für die Gastronomie sind wiederverwendbare Lösungen de facto nicht optimal wegen der schnellen Verschmutzung des Filterteiles durch stark färbende Anteile vor allem bei Schwarztee.

Die Einmal-Lösungen weisen den Nachteil auf, dass sie für den Gastronomen zum einem meist schwer zu handhaben sind, da hier zuerst ein manuelles Aufhalten des nicht formbeständigen Filterteiles erforderlich ist. Ein weiterer Nachteil liegt darin, dass ein solcher nur einmal verwendeter Teefilter in der Regel nicht durchsichtig ist und daher der in Wasser schwimmende Tee nicht oder höchstens von der Einfüllöffnung aus sichtbar ist.

Diese Einsehbarkeit des Tees ist jedoch für den Teeliebhaber einerseits Teil des Teegenusses und für den Gastronomen andererseits die Nachweismöglichkeit für die Verwendung eine hochwertigen Tees.

### III. Darstellung der Erfindung

### a) Technische Aufgabe

Es ist daher die Aufgabe gemäß der Erfindung, ein Teesieb zu schaffen, welches die Nachteile des Standes der Technik vermeidet.

### b) Lösung der Aufgabe

Diese Aufgabe wird durch die Merkmale des Anspruchs 1 gelöst. Vorteilhafte Ausführungsformen ergeben sich aus den Unteransprüchen.

Für die Handhabung zu bevorzugen sind Teesiebe, die - unabhängig ob sie für den einmaligen oder mehrfachen Gebrauch bestimmt sind - einerseits aus einem Grundkörper bestehen, der zumindest im Gebrauchszustand so formstabil ist, dass er den während des Gebrauches auftretenden Belastungen gewachsen ist und insbesondere der Belastung beim Auflegen oder Einhängen auf den oberen Rand eines Teebehälters, wie eines Teeglases oder einer Teekanne, erlaubt, sowie andererseits aus einem Siebteil, der die Bestandteile des Tees im Innenraum des Teesiebes zurückhält.

Dabei können der die Formstabilität bietende Grundkörper und der die Siebfunktion bietende Siebteil teilweise, aber auch vollständig ineinander übergehen, also auch funktionsvereinigt sein.

Wenn das Teesieb wenigstens teilweise oder ganz aus lichtdurchlässigem Material besteht, insbesondere einem Material, welches stark lichtdurchlässig ist, kann der Nutzer durch dieses durchsichtige Material hindurch während des Ziehens des Tees im Teewasser - falls der Teebehälter ebenfalls durchsichtig ist, was oft der Fall ist - das Quellen des Tees sowie die Farbveränderung des Wassers beobachten und dadurch einerseits den Fortschritt der Teezubereitung kontrollieren und andererseits die Qualität der verwendeten Teepartikel sehen.

Für das einfache Einfüllen der Teepartikel zum Einen und eine gute Qualität des zubereiteten Teegetränks zum Anderen ist es notwendig, dass die Teepartikel in einem möglichst großen Flüssigkeitsvolumen schwimmen können, also der Innenraum des Teesiebes möglichst groß ist, was beispielsweise durch eine Becherform oder Beutelform, zumindest des Siebteiles, vorzugsweise des gesamten Teesiebes, sehr gut sichergestellt werden kann.

Die Beutelform wird dabei durch eine den Innenraum für die Teepartikel umlaufende Wandung gebildet, deren untere Öffnung durch einen Boden dicht verschlossen wird, und deren oberer Rand vorzugsweise radial nach außen vorsteht, zumindest mit einem Teil des Umfangsbereiches, und dort zum Auflegen auf dem Rand eines Getränkebehälters dient.

Der formstabile Grundkörper kann dabei entweder grundsätzlich formstabil sein oder nur in seinem Gebrauchszustand, also in dem Transportzustand, den er vor dem Gebrauchszustand einnimmt, entweder nicht formstabil sein oder eine andere Form besitzen als im Gebrauchszustand.

Das Siebteil dagegen ist nur teilweise, vorzugsweise in seiner gesamten Erstreckung, nicht formstabil und besteht beispielsweise aus einem Filtervlies, sei es aus Kunststoff oder organischem Material, oder einer vielfach gelochten dünnen Folie, die ebenfalls aus Kunststoff bestehen kann.

Vorzugsweise besteht zumindest derjenige Teil des formstabilen Grundkörpers, der bei Benutzung des Teesiebes in die Flüssigkeit eintaucht, aus dem lichtdurchlässigen, insbesondere durchsichtigen, Material und wenn möglich auch das Siebteil, insbesondere auch deren nicht selbständig formbeständiger Teil des Siebteiles.

Siebteil und Grundkörper können entweder aus grundsätzlich verschieden Materialien, beispielsweise einem Kunststoff einerseits und einem Papiermaterial andererseits, bestehen oder aus dem gleichen Grundmaterial, welches nur in unterschiedlicher Wandstärke und/oder unterschiedlicher körperlicher Gestalt, z. B. massivem Material einerseits und gewebtem Material andererseits vorliegt.

Für die Entsorgung ist es besonders vorteilhaft, wenn entweder der Grundkörper oder das Siebteil und insbesondere beide Teile, selbst wenn sie aus unterschiedlichen Materialien bestehen, jeweils aus biologisch abbaubaren Materialien bestehen und damit gemeinsam und ohne Materialtrennung in den Kompost entsorgt werden können.

Hinsichtlich des insgesamt formstabilen Grundkörpers empfiehlt sich dabei eine Gestaltung, die zur Folge hat, dass die Grundkörper und insbesondere die Teesiebe insgesamt stapelbar sind, um eine einfache Lagerung, aber auch Entnehme der einzelnen Teesiebe für den Gebrauch zu ermöglichen.

Eine besonders einfach zu handhabende und auch herzustellende Bauform besteht darin, einen becherartigen Grundkörper aus formstabilem, durchsichtigem, biologisch abbaubarem Kunststoff als Grundkörper zu benutzen, bei dem zumindest der Großteil des Bodens, ggf. auch die unteren Bereiche der Wandung des Bechers, aus einem in sich nicht formstabilen Filtervlies bestehen, welches an den Grundkörper angeschweißt ist. Beispielsweise kann bei einem solchen formstabilen Becher als Grundkörper der Bodenbereich nur aus einem äußeren, ringförmig umlaufenden Randbereich des Bodens bestehen.

Zusätzlich können auch im Wandbereich des Grundkörpers noch Löcher vorhanden sein, um die Durchtrittsmöglichkeiten für die Flüssigkeit und damit den Austausch von Geschmacksstoffen, die der Tee bieten soll, zwischen Innen- und Außenraum bzgl. des Teesiebes zu verbessern.

Das becherartige Teil kann auch nur aus einer umlaufenden Wandung bestehen, an dem um den unteren Randbereich herum ein beutelartiges, in sich nicht formstabiles, Siebteil angeschweißt ist. Der formstabile Grundkörper weist dabei einen oberen Rand, vorzugsweise entweder einen radial nach außen vorstehenden, umlaufenden, Rand oder zumindest einzelne radial nach außen vorstehende Vorsprünge auf, die zum Auflegen auf dem oberen Rand des Getränkebehälters dienen. Zusätzlich kann einer dieser radial vorstehenden Vorsprünge dabei als nach unten gekröpfter Haken ausgebildet sein, zum Einhängen am Rand des Getränkebehälters, so dass sich das Teesieb außerhalb des Getränkebehälters befindet. Ebenso kann einer der Vorsprünge als nach außen vorstehender Griff zum Handhaben des Teesiebs ausgebildet sein oder ein solcher Griff ist zusätzlich zu den Vorsprüngen vorhanden

Das Filtervlies kann dabei entweder aus einem Kunststoffmaterial, insbesondere des gleichen Kunststoffes wie der Grundkörper, bestehen, oder aus einem anderem Material, beispielsweise einem Papier oder Zellstoff. Sofern jedoch beide Materialien, also das des Grundkörpers, als auch das des Siebteiles, biologisch abbaubar sind, also vorzugsweise beispielsweise der Grundkörper aus biologisch abbaubarem formstabilen Kunststoff besteht und das Siebteil aus biologisch abbaubarem Filterpapier, können beide gemeinsam der Kompostierung zugeführt werden und zerfallen dort vollständig.

Anstelle eines Filtervlieses kann auch eine dünne, nicht formstabile Folie aus dem gleichen Material wie das des Grundkörpers verwendet werden, welches eine Vielzahl von Löchern aufweist, die beispielsweise durch Laserbeschuss hergestellt werden können.

Um trotz einer Lochgröße von deutlich unter 1 mm, vorzugsweise unter 0,7 mm vorzugsweise unter 0,5 mm oder gar unter 0,3 mm, beim Herausnehmen des Tees aus dem Teebehälter das Abfließen des Wassers zügig von statten gehen zu lassen, kann zur Herabsetzung der Oberflächenspannung des Wassers eine solche Folie an einer definierten Stelle innerhalb des Siebteiles eine oder mehrere nach unten gerichtete Spitzen bilden, entlang denen die Teeflüssigkeit nach außen unten abtropft und dadurch die noch im Innenraum befindliche Flüssigkeit auch durch die sehr kleinen Öffnungen nachsaugt wird.

Bei einem formstabilen Grundkörper liegt die Wandstärke vorzugsweise zwischen 0,2 mm und 1,8 mm, insbesondere zwischen 0,25 mm und 1,1 mm, im Wesentlichen unabhängig davon, ob es sich bei dem Material um einen Kunststoff oder z. B. Pappe handelt.

Der größte Außendurchmesser des Teesiebes, insbesondere am oberen Rand, ist dabei größer zu wählen, als die freie Öffnung des benutzten Getränkebehälters, in welche das Teesieb eingehängt werden soll, und zur Schaffung eines ausreichend breiten Innenraumes sollte die obere Öffnung des Teesiebes mindestens das 0,2 fache, besser mindestens das 0,3 fache, besser mindestens das 0,4 fache der Höhe des Teesiebes betragen.

In absoluten Maßen sollte die obere Öffnung des Teesiebes mindestens 2 cm, besser mindestens 3 cm, besser mindestens 4 cm betragen.

Das Teesieb kann auch insgesamt aus einem formstabilen Grundkörper, beispielsweise aus durchsichtigem, biologisch abbaubaren Kunststoffmaterial bestehen, in dem dann zumindest im Bodenbereich, vorzugsweise auch im Wandungsbereich, wiederum eine Vielzahl der vorerwähnten und beschriebenen Löcher angeordnet sind.

Bei dem Kunststoffmaterial handelt es sich um thermoplastisches Material, um durch Erwärmen - sei es mittels Heizstempel oder mittels Ultraschallschwingungen - dieses Kunststoffmaterial, aus dem vorzugsweise der Grundkörper besteht, auch mit anderen, nicht thermoplastischen Materialien wie etwa Filterpapier, durch Erhitzen bis zum teigigen, klebrigen Zustand verkleben zu können ohne einen zusätzlichen Kleber benutzen zu müssen.

In Relation zum Getränkebehälter ist das Teesieb dabei vorzugsweise so dimensioniert, dass das Volumen des Innenraumes des Teesiebes mindestens 50%, insbesondere mindestens 60%, besser gar 70% oder 80% des Innenvolumens des Getränkebehälters beträgt und/oder auch der Durchmesser der freien Öffnung des Teesiebes mindestens 70%, besser 80%, besser 90% des Durchmessers der Öffnung des Getränkebehälters beträgt.

Ein für den Benutzer sehr vorteilhaftes beutelförmiges Teesieb kann dadurch geschaffen werden, dass im Gegensatz zu dem bisher aus zwei verbundenen Lagen, die Vorder- und Rückseite des Beutels bilden, und einem ergänzenden Boden, die Vorderseite des Beutels nicht aus Filtervlies, sondern einem durchsichtigen Material, beispielsweise einer durchsichtigen Kunststofffolie, besteht. Die Kunststofffolie kann dabei Löcher aufweisen, ist bevorzugt jedoch ungelocht, da der Flüssigkeitsaustausch durch die als Filter ausgebildete Rückseite hindurch erfolgt, was für das Ziehen des Tees ausreichend ist, sofern wie üblich im Benutzungszustand der Innenraum des Siebbeutels einen wesentlichen Teil des Flüssigkeitsvolumens des Getränkebehälters, also der Teetasse oder des Teekännchens, beträgt.

Dadurch kann der Betrachter von der Vorderseite her jedoch zum einen das Aufquellen des Teegranulats und dessen Bewegung in der Flüssigkeit beobachten, andererseits die Verfärbung des entstehenden Getränkes und damit den richtigen Zeitpunkt zum Beenden des Prüfvorganges gut erkennen.

Bevorzugt besteht dabei auch die durchsichtige Folie aus einem biologisch abbaubaren, insbesondere kompostierbaren, Material, wie auch das Filtermaterial.

Bei Teesieben, bei denen der formstabile Grundkörper im Wesentlichen die Gesamtgestalt des Teesiebes bestimmt, also der Siebteil in den formstabilen Grundkörper partiell integriert ist, kann der Grundkörper in seinem unteren Bereich, vorzugsweise an seinem tiefsten Punkt, ein betätigbares Ventil zum Ablassen von Flüssigkeit aufweisen.

Nach dem Brühen des Tees kann dieses Teesieb aus dem Getränkebehälter herausgehoben werden bei geöffnetem Ventil, so dass die Flüssigkeit im Wesentlichen in den Getränkebehälter hinein abläuft.

Für das anschließende Abstellen des Siebes mit dem darin befindlichen nassen Teegranulat auf einer separaten Abstellfläche oder Ähnlichem bleibt dann das Ventil geschlossen, so dass kein nachträgliches Auslaufen oder Heraussickern von stark färbender Teeflüssigkeit aus dem Sieb möglich ist.

Eine andere Möglichkeit, den Brühvorgang einerseits gut zu beobachten und andererseits auf einfache Art und Weise zu beenden besteht darin, dass durch den durchsichtigen Grundkörper hindurch das Brühen des Teegranulats im Inneren des Grundkörpers gut beobachtet werden kann, andererseits aber das Beenden des Brühvorganges nicht durch das Herausnehmen des Teesiebes samt Teegranulat aus dem Getränkebehälter erfolgt, sondern lediglich, indem das Teegranulat innerhalb des Grundkörpers verdichtet wird bis die Partikel des Teegranulats so eng aneinander anliegen, dass der Austausch von Stoffen zwischen dem Granulat und der umgebenden Flüssigkeit auf ein Minimum beschränkt wird. Zu diesem Zweck umfasst der formstabile Grundkörper zwei gegeneinander bewegliche Teile, die zwischen sich das Volumen zum Aufnehmen des Teegranulats einschließen. Für den Brühvorgang ist dieses Volumen dazwischen möglichst groß, so dass dabei die Teepartikel in einem großen Flüssigkeitsvolumen schwimmen oder schweben. Zum Beenden des Brühvorganges werden die Teile so gegeneinander bewegt, dass das dazwischen eingeschlossene Volumen drastisch auf ein Zehntel oder gar ein Zwanzigstel oder weniger des ursprünglichen Volumens beschränkt wird, und insbesondere soweit beschränkt werden kann, bis die zusammengepressten Teepartikel einen zu hohen Widerstand gegen ein weiteres Zueinanderbewegen der Teile des Grundkörpers entgegensetzen.

Das eine Teil des Grundkörpers ist dabei vorzugsweise der Becherteil des Grundkörpers, das andere Teil kann ein hierzu in vertikaler Richtung, also in axialer Richtung bewegbarer Schieber sein, der den freien Querschnitt des becherförmigen Grundkörpers abdichtet und zum Verringern des Zwischenraumes nach unten in Richtung Boden des Grundkörpers geschoben wird. Auch eine von einer zentralen vertikalen Achse des Grundkörpers aus nach außen ragende Schottwand kann mit einer zweiten, um die Achse herum verschwenkbaren Schottwand zwischen sich - zusammen mit der Achse und der Wandung des becherförmigen Siebteiles un dem Boden - das Teegranulat zwischen sich aufnehmen.

Dabei kann eines oder beide der relativ zueinander beweglichen Teile Löcher aufweisen zum Hindurchtreten der Flüssigkeit, um die Relativbewegung zu erleichtern.

### c) Ausführungsbeispiele

Ausführungsformen gemäß der Erfindung sind im folgenden beispielhaft näher beschrieben. Es zeigen:
- Fig. 1:: ein becherförmiges Teesieb,
- Fig. 2:: eine Abwandlung des becherförmigen Teesiebes,
- Fig. 3:: ein beutelförmiges Teesieb mit festem Grundkörper.

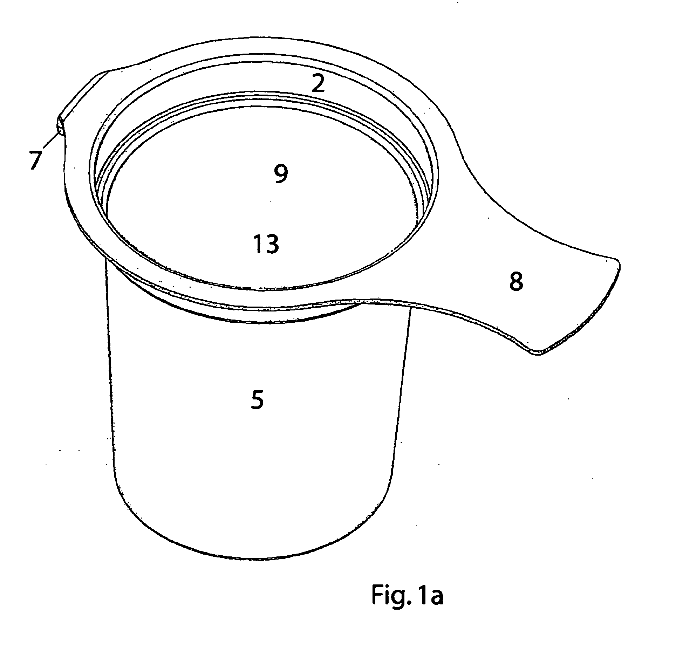

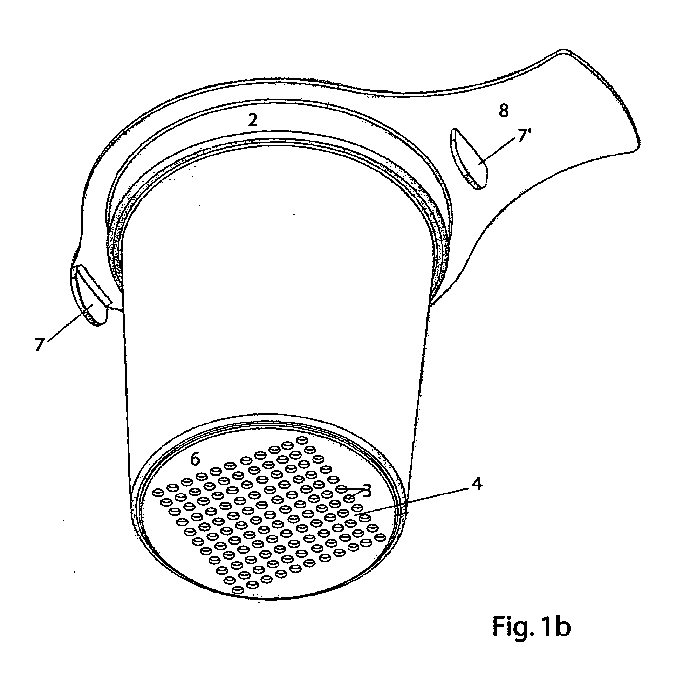

Fig. 1a,b zeigt ein becherartiges Teesieb 1, bei dem der formstabilen Grundkörper 2 den gesamten oberen Randbereich sowie die daran anschließenden, nach unten bis zum Boden 6 reichenden und den Innenraum 13 dicht umschließende Wandung 5 umfasst.

Das untere Ende der rundum laufenden, den Innenraum 13 nach unten leicht konisch verjüngenden, Wandung 5 ist nach innen gekröpft und bildet den Boden 6, der das Siebteil 4 darstellt und dementsprechend Löcher 3 enthält.

Der Grundkörper 2 ist im oberen Randbereich zur zusätzlichen Stabilisierung im Verlauf der Wandung 5 Z-förmig nach außen gekröpft und geht am oberen Ende der Wandung 5 in den nach außen radial abstehenden Rand 18 über.

Der Rand 18 ist auf zwei einander gegenüberliegenden Seiten radial über den normalen radialen Überstand hinaus verlängert und bildet dabei auf der einen Seite den weiter radial vorstehenden Griff 8 zum Greifen und Handhaben des gesamten Teesiebes 1, und auf der gegenüberliegenden Seite einen nach unten gekröpften Haken 7, der vor allem dem Einhängen des Teesiebes 1 vor der eigentlichen Benutzung an der Außenseite eines Teebehälters 11, beispielsweise einer Teekanne dient, in dem den Haken 7 auf den Rand des Teebehälters 11 gestreckt wird und in dessen Innraum nach unten ragt, während sich der Rest des Teesiebes 1 außen hängend am Teebehälter 11 befindet.

Der gesamte Grundkörper 2 ist dabei in sich formstabil und meist im Spritzgussverfahren oder Stanzverfahren aus einem der Wärme des fast kochenden Tees widerstehenden, durchsichtigen, Material hergestellt, beispielsweise einem Kunststoff oder einem vorzugsweise aus pflanzlicher Stärke bestehenden Material.

Bevorzugt werden dabei biologisch abbaubare, also vollständig kompostierbare, Materialien für die Herstellung des Grundkörpers 2 verwendet, und ebenso für den Boden 6. Die konische Verjüngung des Teesiebe 1 nach unten dient einerseits der Herstellbarkeit im Spritzgussverfahren und andererseits der Stapelbarkeit der fertigen Teesiebe zu Vorratszwecken.

Auf der Unterseite des nach außen vorstehenden Randes 18, insbesondere im Verlauf zum Griff 8 hin und damit bzgl. der Öffnung 9 des Teesiebes 1 gegenüberliegend zum Haken 7 ist ein weiterer Haken 7' in Form eines von dem Rand 18 nach unten abragenden Fortsatzes vorhanden, der beim Einsetzen des Teesiebes 1 in einen Getränkebehälter 11 zusätzlich die Querpositionierung des Teesiebes 1 im Getränkebehälter 11 fixiert.

Bei der Lösung gemäß Fig. 1a,b ist der Boden 6 ebenfalls formstabil, und insbesondere als Spritzgussteil hergestellt, mit einer Vielzahl darin angeordneter, z. B. gebohrter Löcher 3.

Das Problem der Löcher 3 besteht jedoch darin, dass beim Bohren der Löcher ein Durchmesser von ca. 0,5 mm kaum unterschritten werden kann.

Löcher von 0,5 mm Durchmesser und größer lassen jedoch noch eine Vielzahl von kleinen Teepartikeln nach außen durch, die in einem durchsichtigem Teeglas aufgrund der Linsenwirkung des Teeglases optisch sogar noch größer wirken, als sie tatsächlich sind und daher für den Bereich der Gastronomie nicht akzeptabel sind.

Ein weiteres Problem besteht darin, dass bereits Löcher von 0,5 mm Durchmesser, erst recht aber kleinere Löcher, in einem ebenen Boden 6 beim Herausheben des Teesiebes aus dem Getränkebehälter 11 das im Innraum 13 befindliche Wasser nur bis zu einer gewissen Restmenge herausfliessen lassen.

Ist ein Flüssigkeitsstand von z. B. weniger als 1 cm in einem derartigen Teesieb erreicht, ist die Oberflächenspannung des Wassers an den Löchern 3 in der Regel so groß, dass das restliche Wasser nicht mehr selbsttätig durch diese kleinen Löcher abfließt. Auch durch zusätzliche Löcher 3 in der Wandung 5, beispielsweise in deren unteren Bereich, kann dieses Problem nicht behoben werden.

Sobald jedoch die Unterseite des Bodens 6 mit irgendeinem Gegenstand berührt wird, an dem entlang das Wasser abfließen kann, wird es durch die Löcher sozusagen hindurchgesaugt.

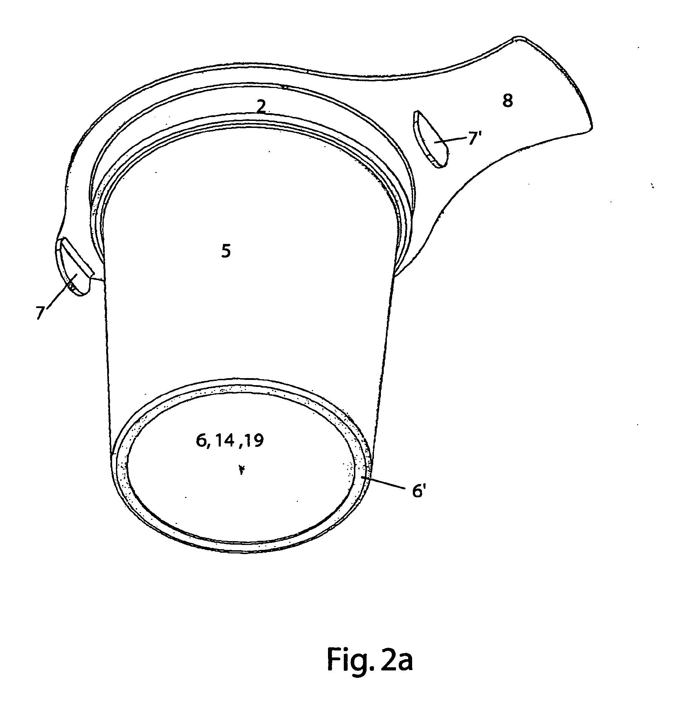

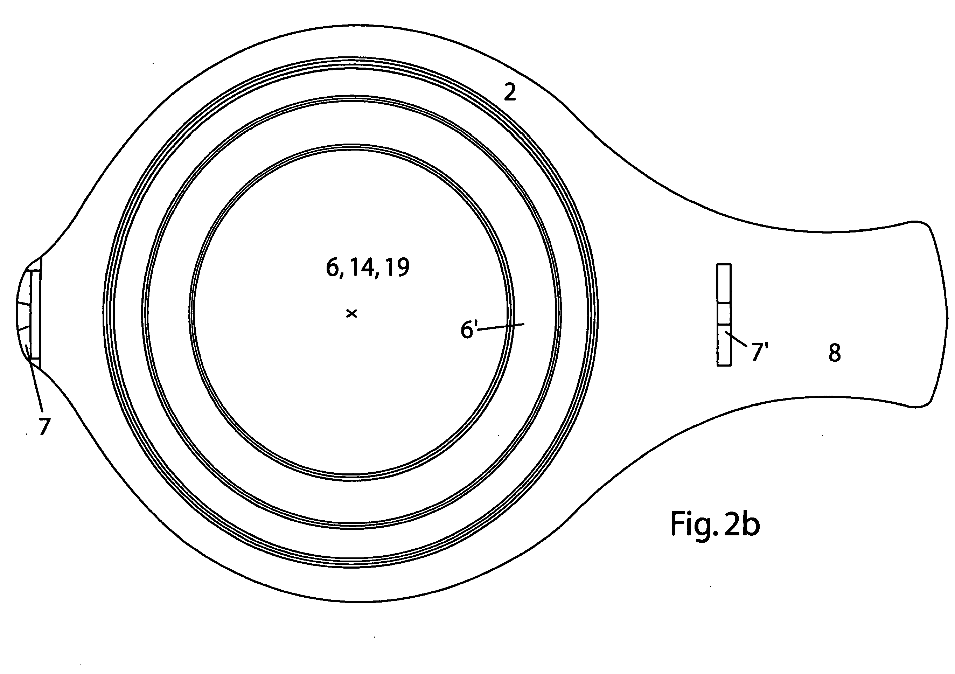

Gemäß Fig. 2 kann der Boden 6 jedoch auch aus einem selbst nicht formstabilen Material, beispielsweise einer vielfach gelochten, insbesondere fein gelochten, Folie 19 bestehen, die mit dem radial nach innen vorstehenden, stabilen Bodenrand 6' des Grundkörpers 2 verbunden.

Vorzugsweise bestehen auch bei einem in sich nicht formstabilen Boden 6 dieser Boden 6 und der Grundkörper 2 aus dem gleichen Material, jedoch aus Materialien, die beide biologisch abbaubar, also z. B. kompostierbar, sind. Dabei kann das biologische Abbauen von unterschiedlichen benötigten Parametern abhängen, beispielsweise dem Auftreffen von UV-Licht oder Sonnenlicht auf dem Material, dem Vorhandensein von Sauerstoff, Feuchtigkeit, bestimmten Mikroben oder physikalischen oder chemischen oder organischen Parametern.

In den Fig. 2a und b sind im Boden 6 einzelne Löcher 3 nicht mehr zu erkennen, da diese so fein sind, dass sie nicht mehr zeichnerisch darstellbar sind.

Da bei den Lösungen gemäß Fig. 1 und 2 nur oder schwerpunktmäßig der Boden 6 Löcher 3 aufweist, taucht hier der Grundkörper 2 mit seiner Wandung 5 in das Wasser im Getränkebehälter 11 ein, und muss aus diesem Grunde aus einem Material bestehen, welches geschmacksneutral ist und sowohl der Wärme als auch der Feuchtigkeit des Teewassers, wenigstens eine begrenzte Zeit während des Ziehen des Tees, widersteht.

In beiden Fällen, also bei den Lösungen der Fig. 1 ebenso wie bei derjenigen der Fig. 2 - wird bevorzugt der Boden 6 nicht als ebene Fläche ausgebildet, sondern nach unten durchgebogen, vorzugsweise mit einer nach unten gerichteten Spitze gebildet, was das vollständige Abfließen des Wassers beim Hochheben aus dem Getränkebehälter 11 heraus erleichtert.

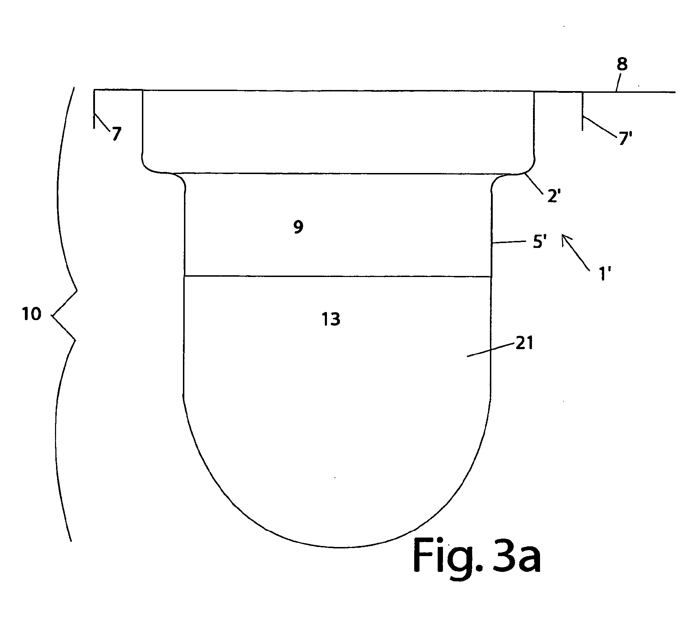

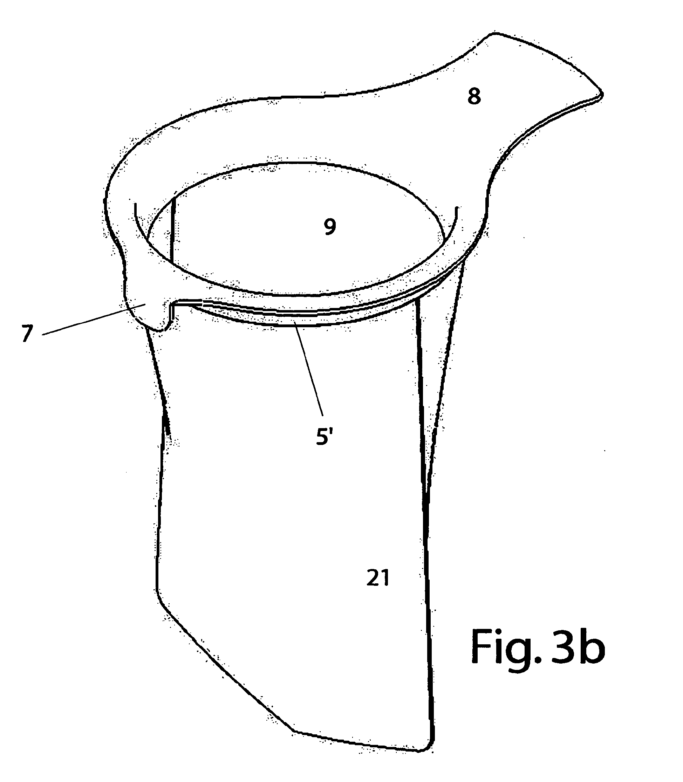

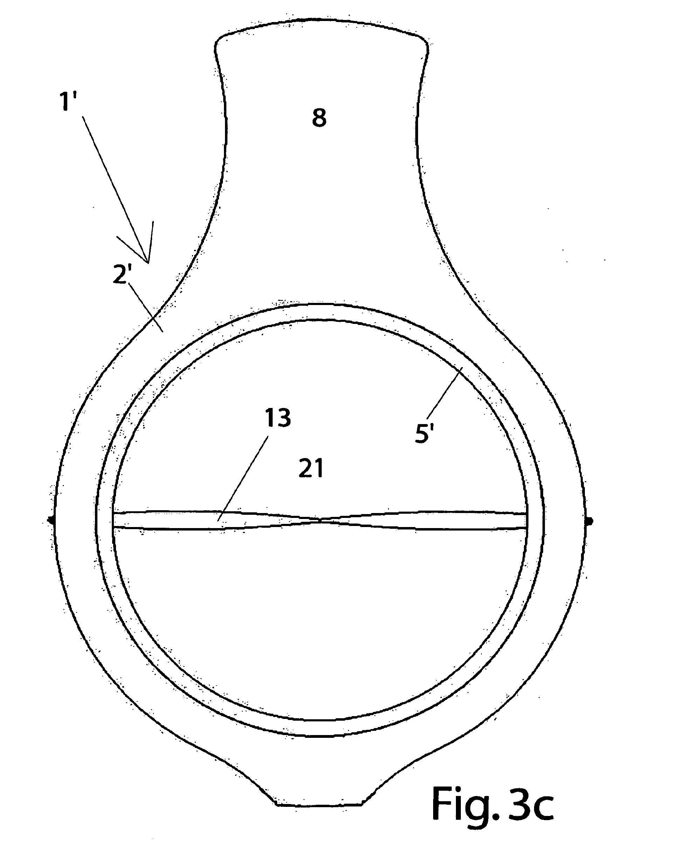

Fig. 3 zeigt eine Lösung, bei der der formstabile Grundkörper 2' im oberen Bereich analog demjenigen der Fig. 1 und 2 entspricht, dessen Wandungen 5' jedoch wesentlich weniger weiter nach unten reichen, und nur einen Wandansatz darstellen, an dem der obere Rand eines Beutels 21 aus einem nicht formbeständigen Filtermaterial, sei es ein Filtervlies, ein Gewebe oder eine vielfach fein gelochte Folie 19 befestigt.

Die Höhe des Beutels 21 beträgt mehr als 50% der der gesamten Höhe 10 des Teesiebes 1', insbesondere mehr als 70% dessen Höhe, so dass die Fläche, innerhalb der sich Löcher für den Austausch von Flüssigkeit und den darin mitgetragenen Schwebstoffen vorhanden sind, wesentlich größer ist.

Fig. 3c zeigt dabei in der Aufsicht auf die Öffnung 9 von oben, dass der Beutel in der Mitte mit seinen Seitenwänden sich aneinander annähern kann und erst durch Einwerfen des Tees oder Einführen z. B. eines Löffels oder das Nachlassen der Stabilität des Beutels 21 durch Eintauchen in das Teewasser sich der Beutel 21 auf seiner gesamten Höhe zu seinem vollen Innenraum 13 aufweitet.

## Patentansprüche

1. Teesieb (1) mit
- einerseits einem wenigstens im Gebrauchszustand formstabilen Grundkörper (2),
- andererseits einem Siebteil (4), in dem sich Löcher (3) befinden, wobei
- der Grundkörper (2) des Teesiebes (1) aus durchsichtigem Material besteht,
- der Grundkörper (2) aus einem formstabilen Kunststoffmaterial nach Art eines formstabilen Bechers hergestellt ist und
- das Teesieb (1) einstückig hergestellt ist und eine Vielzahl von Löchern (3) mit einem Durchmesser von unter 1 mm, wenigstens im Boden (6), insbesondere auch in der Wandung (5), aufweist,
**dadurch gekennzeichnet, dass**
- Siebteil (4) und Grundkörper (2) aus wenigstens hinsichtlich der Materialstärke unterschiedlich dicken Materialien bestehen,
- die Wandstärke des formstabilen Grundköpers (2) zwischen 0,2 mm und 1,8 mm, insbesondere zwischen 0,25 mm und 1,1 mm, beträgt,
- die Löcher (3) durch Bohren oder Laserbeschuss hergestellt sind,
- wenigstens der Grundkörper (2) des Teesiebes (1) so gestaltet ist, dass die Teesiebe (1) stapelbar sind, und
- der Durchmesser der oberen Öffnung (9) mindestens 4 cm beträgt.

2. Teesieb nach Anspruch 1,
**dadurch gekennzeichnet, dass**
die Löcher (3) einen Durchmesser unter 0,7 mm, insbesondere unter 0,5 mm, insbesondere unter 0,3 mm, aufweisen.

3. Teesieb (1) nach einem der vorhergehenden Ansprüche,
**dadurch gekennzeichnet, dass**
am Grundkörper (2) ein außen vorstehender, nach unten gekröpfter Haken (7) zum Einhängen an der Außenseite am Rand einer Tasse oder einer Kanne vorhanden ist,

4. Teesieb (1) nach einem der vorhergehenden Ansprüche,
**dadurch gekennzeichnet, dass**
der obere Bereich (1a) des Teesiebes Bestandteil des formstabilen Grundkörpers (2) und der untere Bereich Bestandteil des Siebteiles (4) ist.

5. Teesieb (1) nach einem der vorhergehenden Ansprüche ,
**dadurch gekennzeichnet, dass**
Siebteil (4) und Grundkörper (2) aus verschiedenen Materialien bestehen.

6. Teesieb (1) nach einem der vorhergehenden Ansprüche,
**dadurch gekennzeichnet, dass**
am Grundkörper (2) des Teesiebes (1) ein radial nach außen vorstehender Griff (8), insbesondere auf der vom Haken (7) gegenüberliegenden Seite, angeordnet ist.

7. Teesieb (1) nach einem der vorhergehenden Ansprüche,
**dadurch gekennzeichnet, dass**
der Grundkörper (2), insbesondere das gesamte Teesieb (1), sich von oben nach unten leicht konisch verjüngend ausgebildet ist.

8. Teesieb (1) nach einem der vorhergehenden Ansprüche,
**dadurch gekennzeichnet, dass**
der Durchmesser der oberen Öffnung (9) mindestens das 0,2 fache, besser mindestens das 0,3-fache, besser mindestens das 0,4-fache, der Höhe (10) des Teesiebes beträgt.

## Claims

1. A tea screen (1) comprising:
- at least one base element (2) that is form stable at least in its operating condition;
- a screen component (4) including holes (3), wherein
- the base element (2) of the tea screen (1) is made from transparent material,
- the base element (2) is made from a form stable plastic material and shaped as a form stable beaker, and
- the tea screen (1) is provided integral in one piece and includes a plurality of holes (3) with a diameter below 1 mm, at least in the base (6), in particular also in the wall (5), wherein
- the screen element (4) and the base element (2) are made from materials with different thicknesses,
- the wall thickness of the form stable base element (2) is between 0.2 mm and 1.8 mm, in particular between 0.25 mm and 1.1 mm,
- the holes (3) are produced through drilling or laser impact,
- at least the base element (2) of the tea screen (1) is configured so that the tea screens (1) are stackable, and
- the diameter of an upper opening (9) is at least 4 cm.

2. The tea screen according to claim (1), wherein the holes (3) have a diameter below 0.7 mm, in particular below 0.5 mm, in particular below 0.3 mm.

3. The tea screen (1) according to one of the preceding claims, wherein an outward protruding downward elbowed hook (7) is provided at the base element (2) for engaging an outside at an edge of a cup or pot.

4. The tea screen (1) according to one of the preceding claims, wherein the upper portion (1 a) of the tea screen is an element of the form stable base element (2) and the lower portion of the tea screen is an element of the screen element (4).

5. The tea screen (1) according to one of the preceding claims, wherein the screen component (4) and the base element (2) are made from different materials.

6. The tea screen (1) according to one of the preceding claims, wherein a radially outward protruding handle (8) is arranged at the base element (2) of the tea screen (1), in particular on a side arranged opposite to the hook (7).

7. The tea screen (1) according to one of the preceding claims, wherein the base element (2), in particular the entire tea screen is provided with a slight conical taper from top to bottom.

8. The tea screen (1) according to one of the preceding claims, wherein the diameter of the upper opening (9) is at least 0.2 times, better at least 0.3 times, better at least 0.4 times the height (10) of the tea screen.

## Revendications

1. Passoire à thé (1) avec
- d'une part au moins un corps de base (2) stable à l'état d'utilisation
- d'autre part une partie passoire (4) dans laquelle se trouvent des trous (3),
- le corps de base (2) de l'infuseur à thé (1) étant composé de matériau transparent,
- le corps de base (2) étant fabriqué à partir d'une matière plastique de forme stable comme un gobelet de forme stable et
- la passoire à thé (1) étant fabriquée d'une seule pièce et présentant un grand nombre de trous (3) avec un diamètre inférieur à 1 mm, au moins dans le fond (6), en particulier également dans la paroi (5),
**caractérisée en ce que**
- la partie passoire (1) et le corps de base (2) se composent au moins de matériaux d'épaisseur différente,
- l'épaisseur de paroi du corps de base de forme stable (2) est comprise entre 0,2 mm et 1,8 mm en particulier entre 0,25 mm et 1,1 mm,
- les trous (3) sont fabriqués par perçage ou au tir laser
- au moins le corps de base (2) de la passoire à thé (1) est réalisé de sorte que les passoires à thé (1) sont empilables,
et
- le diamètre de l'ouverture supérieure (9) est au moins de 4 cm.

2. Passoire à thé selon la revendication 1, **caractérisée en ce que** les trous (3) présentent un diamètre inférieure à 0,7 mm, en particulier inférieure à 0,5 mm, en particulier inférieure à 0,3 mm.

3. Passoire à thé (1) selon l'une des revendications précédentes **caractérisée en ce que** il est prévu sur le corps de base (2) un crochet (7) saillant vers l'extérieur et coudé vers le bas pour être accrochée sur la face externe au bord d'une tasse ou d'une théière.

4. Passoire à thé (1) selon l'une des revendications précédentes **caractérisée en ce que** la partie supérieure (1 a) de la passoire à thé fait partie du corps de base (2) de forme stable et la zone inférieure fait partie de la partie de passoire (4).

5. Passoire à thé (1) selon l'une des revendications précédentes **caractérisée en ce que** la partie de passoire (4) et le corps de base (2) se composent de matériaux différents.

6. Passoire à thé (1) selon l'une des revendications précédentes **caractérisée en ce qu'**il est disposé sur le corps de base (2) de la passoire à thé (1) une poignée (8), saillante radialement vers l'extérieur en particulier sur la face opposée au crochet (7).

7. Passoire à thé (1) selon l'une des revendications précédentes **caractérisée en ce que** le corps de base (2), en particulier l'ensemble de la passoire à thé (1) est réalisé de forme légèrement conique du haut vers le bas.

8. Passoire à thé (1) selon l'une des revendications précédentes **caractérisé en ce que** le diamètre de l'ouverture supérieure (9) est au moins 0,2 fois de préférence au moins 0,3, au moins de préférence 0,4 fois la hauteur (10) de la passoire à thé.
